Europäisches Patentamt

**European Patent Office**

Office européen des brevets

(19)

(11) Veröffentlichungsnummer: **0 005 540**
**B1**

(12) **EUROPÄISCHE PATENTSCHRIFT**

(45) Veröffentlichungstag der Patentschrift:
**21.04.82**

(21) Anmeldenummer: **79101495.4**

(22) Anmeldetag: **16.05.79**

(51) Int. Cl.³: **A 01 G 3/06** // F16C11/00

(54) Fadenschneider zum Beschneiden von Rasenkanten.

(30) Priorität: 24.05.78 DE 7815655 U
24.05.78 DE 7815656 U

(43) Veröffentlichungstag der Anmeldung:
28.11.79 Patentblatt 79/24

(45) Bekanntmachung des Hinweises auf die Patenterteilung:
21.04.82 Patentblatt 82/16

(84) Benannte Vertragsstaaten:
AT BE CH FR IT NL SE

(56) Entgegenhaltungen:
DE-A-2 448 129
FR-A-2 340 033
FR-A-2 358 816
US-A-2 702 978
US-A-2 829 482
US-A-4 052 789

(73) Patentinhaber: **Wolf-Geräte GmbH, Gregor-Wolf-Strasse
Postfach 860 und 880, D-5240 Betzdorf/Sieg (DE)**

(72) Erfinder: **Kolb, Walter, Martin-Luther-Strasse,
D-5240 Betzdorf/Sieg (DE)**
Erfinder: **Weid, Helmut, Am Koppelberg 2,
D-5241 Niederdreisbach (DE)**
Erfinder: **Schreitmüller, Hansjörg, Dr., Schützenstrasse,
D-5240 Betzdorf/Sieg (DE)**

(74) Vertreter: **Koch, Günther et al, Patentanwälte Dipl.-Ing. C.
Wallach Dipl.-Ing. G. Koch, Dr. T. Haibach Dipl.-Ing. R.
Feldkamp Kaufingerstrasse 8, D-8000 München 2 (DE)**

BUNDESDRUCKEREI BERLIN

Fadenschneider zum Beschneiden von Rasenkanten

Die Erfindung bezieht sich auf einen Fadenschneider mit einem von einem Motor angetriebenen Schneidkopf, von dem wenigstens ein Schneidfaden radial bezüglich der Drehachse in einer vorbestimmten Schneidlänge vorsteht, mit einem Motorgehäuse, das über einen Stiel mit einem Handgriff verbunden ist, mit einem Drehgelenk, durch das die Schneidebene des Fadenschneiders von der Horizontalstellung in eine Stellung mit vertikaler Schneidebene verstellbar ist und mit einem Hilfsgriff im Mittelabschnitt des Stiels. Ein solcher Fadenschneider ist aus der US-PS 4 052 789 bekannt. Hierbei ist im Mittelbereich des Stiels ein Drehgelenk eingebaut, dessen Drehachse in Stiellängsrichtung verläuft und das über zwei zusammenwirkende Kupplungshülsen in verschiedenen Winkelstellungen einrastbar ist, derart, daß die Schneidebene parallel zum Boden oder senkrecht hierzu eingestellt werden kann, um überhängende Gräser oder dergleichen zu schneiden. Zur Entriegelung der Kupplung müssen die Stielhälften axial auseinandergezogen werden. Die Anordnung ist dabei so getroffen, daß der Stiel in einem Winkel von etwa 45° zum Boden gehalten werden muß, um einen horizontalen oder vertikalen Schnitt durchführen zu können. Dies bedingt, daß der Handgriff in einer bestimmten Höhenlage geführt werden muß. Die ergonometrisch günstigste Höhenlage ist jedoch für Personen unterschiedlicher Größe verschieden, so daß vielfach nicht in der gewünschten Schneidebene gearbeitet wird, sondern in einer Ebene schräg hierzu, wodurch sich ein unvollkommener Schnitt ergibt. Auch ist es mit dem bekannten Gerät nicht möglich, mit der Schneidebene parallel zum Boden unter Büschen oder sonstigen Hindernissen zu schneiden.

Der Erfindung liegt daher die Aufgabe zugrunde, einen Fadenschneider der im Oberbegriff des Patentanspruchs 1 genannten Gattung derart zu verbessern, daß immer mit optimaler Stellung der Schneidebene gearbeitet werden kann und auch bei schwierigem Gartengelände ein bequemes Schneiden gewährleistet ist, indem durch einfache Umstellung die jeweils optimale Schneidlage erreicht werden kann.

Gelöst wird die gestellte Aufgabe dadurch, daß zwischen dem den Schneidkopf tragenden Motorgehäuse und dem Stiel ein in verschiedenen Kippstellungen festlegbares Kippgelenk vorgesehen ist, dessen Schwenkebene senkrecht zur Stielachse und parallel zur Schneidebene derart verläuft, daß der Stiel von der Senkrechten bis in die Horizontale gekippt werden kann und daß am Handgriff ein Handhabeknopf vorgesehen ist, über den das Drehgelenk so entsperrt werden kann, daß das Gerät um 180° gedreht werden kann.

Durch das Kippgelenk wird in Verbindung mit dem Drehgelenk gewährleistet, daß die Griffhöhe einerseits an die Bedienungsperson angepaßt und andererseits auch so eingestellt werden kann, daß der Stiel dicht über dem Boden unter Sträuchern oder anderen überhängenden Teilen geführt werden kann, um darunter das Gras in günstiger Weise zu schneiden. Der am Handgriff vorgesehene Handhabeknopf ermöglicht ohne Änderung der Griffstellung der Hände eine Betätigung des einen Gelenkes, während das andere Gelenk gemäß einer zweckmäßigen Ausgestaltung nach Anspruch 2 über ein am Motorgehäuse vorgesehenes Stellglied betätigt werden kann. Hierdurch ergibt sich eine weitgehende Erhöhung des Bedienungskomforts.

Es ist zwar durch die US-PS 2 702 978 bereits ein mit Messerkämmen arbeitendes Grasschneidegerät bekannt, bei dem der Stiel gegenüber dem Schneidaggregat im Winkel angestellt und durch einen Riegel in unterschiedlichen Winkelstellungen festgelegt werden kann. Bei diesem Gerät muß jedoch bestimmungsgemäß immer mit horizontaler Schneidebene gearbeitet werden, und ein Anstellen in die vertikale Schneidebene oder eine schräg hierzu liegende Ebene ist nicht möglich.

Durch das Drehgelenk wird es möglich, die Schneidebene des Fadenschneiders zu verstellen, und zwar von der Horizontalstellung in eine Stellung, in der die Schneidebene vertikal liegt, so daß überhängende Gräser an Kanten auf einfache Weise entfernt werden können. Der Handgriff am Ende des Stiels kann dabei in seiner ergonometrisch richtigen Lage verbleiben und dadurch, daß gemäß Patentanspruch 3 der Hilfsgriff in der Mitte als Radkörper ausgebildet ist, kann auch die andere Hand den Hilfsgriff in jeder Lage günstig derart erfassen, daß das Gerät eine ausgewogene Lage besitzt.

Weitere zweckmäßige Ausgestaltungen der Erfindung, die die Bedienung erleichtern, ergeben sich aus den Unteransprüchen 4 bis 6.

Weiter bezieht sich die Erfindung auf den Schneidkopf für einen solchen Fadenschneider. Dieser sitzt auf einer rotierenden Welle und umschließt eine Fadenspule, von der quer zur Drehachse durch eine radiale Gehäuseöffnung der Schneidfaden vorsteht, der nach Lösen einer im Betrieb Schneidkopf und Spule drehfest verbindenden Kupplung zur Einstellung der Schneidlänge abziehbar ist. Bei einem aus der US-PS 3 826 068 bekannten Schneidkopf dieser Bauart erfolgt die drehfeste Kupplung zwischen Faden, Spule und Gehäuse durch formschlüssig in das Gehäuse eingreifende Stifte, die am Spulenflansch befestigt sind. Zur Entkupplung ist es dabei erforderlich eine Mutter zu lösen, die dann nach Abziehen des Fadens wieder angezogen werden muß. Diese Kupplungsverbindung setzt die Benutzung eines Werkzeugs voraus und ist daher sehr umständlich in der Bedienung.

Durch die US-PS 3 708 967 ist weiter ein Schneidkopf für Fadenschneider bekannt, bei

dem mehrere Fadenspulen in einem Gehäuse untergebracht sind, wobei jeweils ein Flansch der Spule von unten her frei zugänglich ist und gegen eine den anderen Flansch axial abstützende Feder unter Aufhebung eines Kupplungseingriffs entkuppelt werden kann. Hierbei kann zwar die Entkupplung verhältnismäßig einfach vorgenommen werden, jedoch besteht die Gefahr, daß beim Überfahren von Hindernissen die Spulenflansche eingedrückt werden und der Faden dann im Betrieb in unerwünschter Weise herausgezogen wird. Im übrigen ist hier der Ersatz einer Spule schwierig, weil zu diesem Zweck der Deckel gelöst werden muß, der wiederum mit einer Schraubverbindung am Deckel befestigt ist, wobei die Spulen und der Deckel dann wieder gegen die Federkraft eingefügt werden müssen, was verhältnismäßig schwierig ist.

Gemäß der Erfindung wird der Bedienungskomfort des Fadenschneiders weiter durch die Ausbildung des Schneidkopfes verbessert, der dadurch gekennzeichnet ist, daß die Fadenspule drehbar auf einer Hülse gelagert ist, die ihrerseits auf einer Nabe des Gehäuses drehfest aber axial gegen die Kraft einer Feder verschiebbar ist, und einen Kupplungsflansch aufweist, der mit einem Kupplungsflansch der Fadenspule zusammenwirkt, und daß die Kupplung als Zahnkupplung ausgebildet ist und die Kupplungsflansche mit formschlüssig ineinandergreifenden Verzahnungen oder Klauen versehen sind.

Auf diese Weise ergibt sich eine einwandfreie Lagerung bei geringstem Platzbedarf und eine einfache Bedienung, da die Kupplung einfach dadurch gelöst werden kann, daß die mittels eines Druckknopfes bis zum Deckelrand vorstehende Hülse durch Daumendruck axial verschoben wird. Nach Loslassen des Druckknopfes rastet die Kupplung selbsttätig wieder ein.

Dadurch, daß gemäß Anspruch 8 der Deckel mittels eines Bajonettverschlusses auf dem topfartigen Gehäuse befestigt ist, ergibt sich ein einfaches Abziehen, wonach die verbrauchte Spule entnommen und durch eine neue ersetzt werden kann, ohne daß es notwendig wäre, dabei die Feder direkt zu betätigen. Nach einer weiteren Ausgestaltung gemäß Anspruch 9 weist der Deckel einen Ringbund auf, der das äußere Ende der Hülse führt und die Spule gegen Federkraft axial abstützt. Hierdurch ergibt sich ein einfacher betriebssicherer Aufbau, denn der Schneidkopf besteht aus wenigen Teilen, die aus Kunststoff oder Metall im Spritzverfahren hergestellt werden können.

Nachstehend wird ein Ausführungsbeispiel der Erfindung anhand der Zeichnung beschrieben. In der Zeichnung zeigt

Fig. 1 eine schematische perspektivische Ansicht des erfindungsgemäßen Fadenschneiders mit Kippgelenk,

Fig. 2 eine perspektivische Ansicht des in Fig. 1 dargestellten Fadenschneiders mit Drehgelenk zwischen Stiel und Griff,

Fig. 3 in größerem Maßstab eine Schnittansicht des Motorgehäuses mit Kippgelenk zwischen Motorgehäuse und Stiel,

Fig. 4 in größerem Maßstab eine Schnittansicht des Griffteils mit Drehgelenk,

Fig. 5 einen Axialschnitt eines erfindungsgemäß ausgebildeten Schneidkopfes für Fadenschneider.

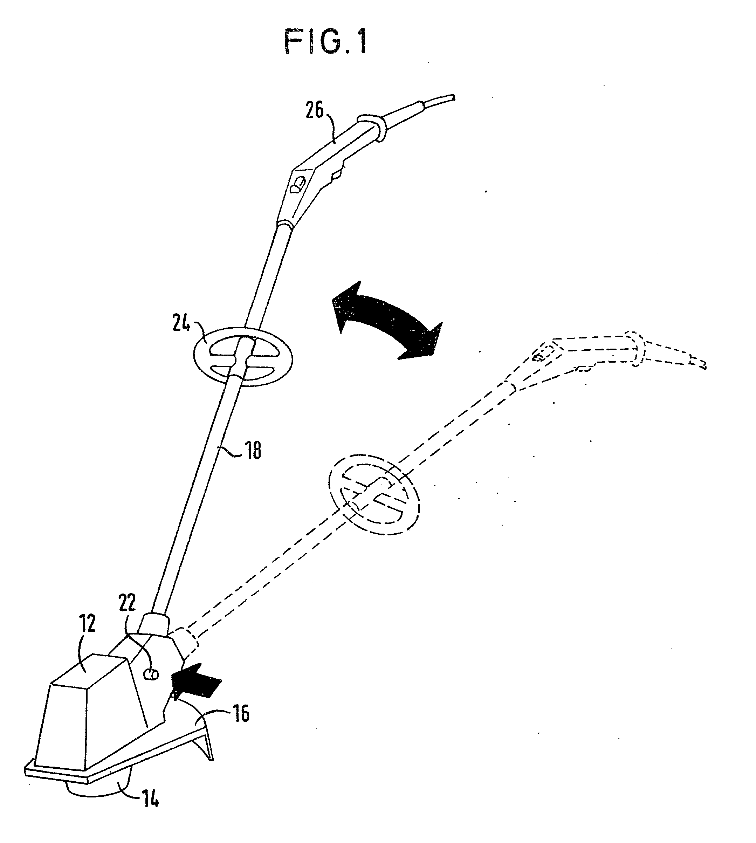

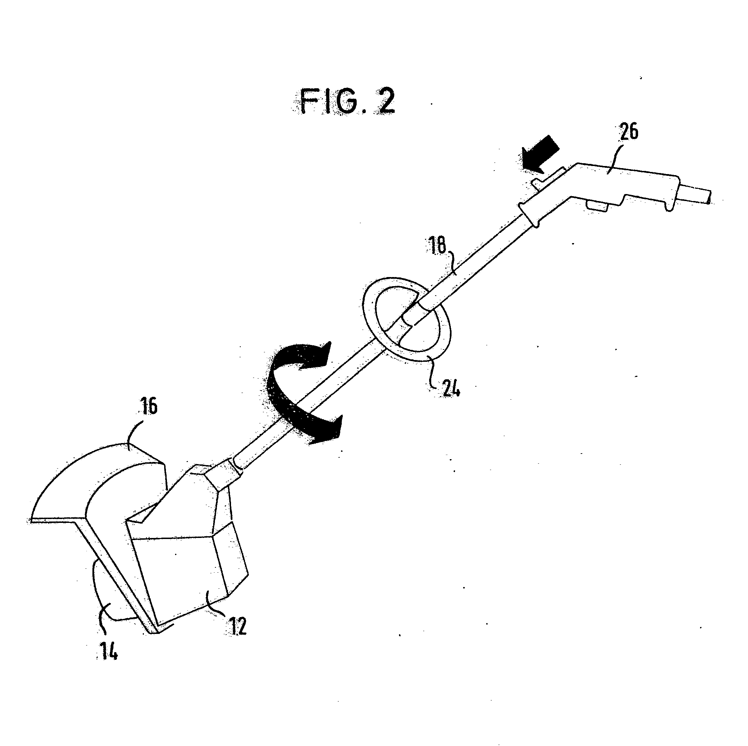

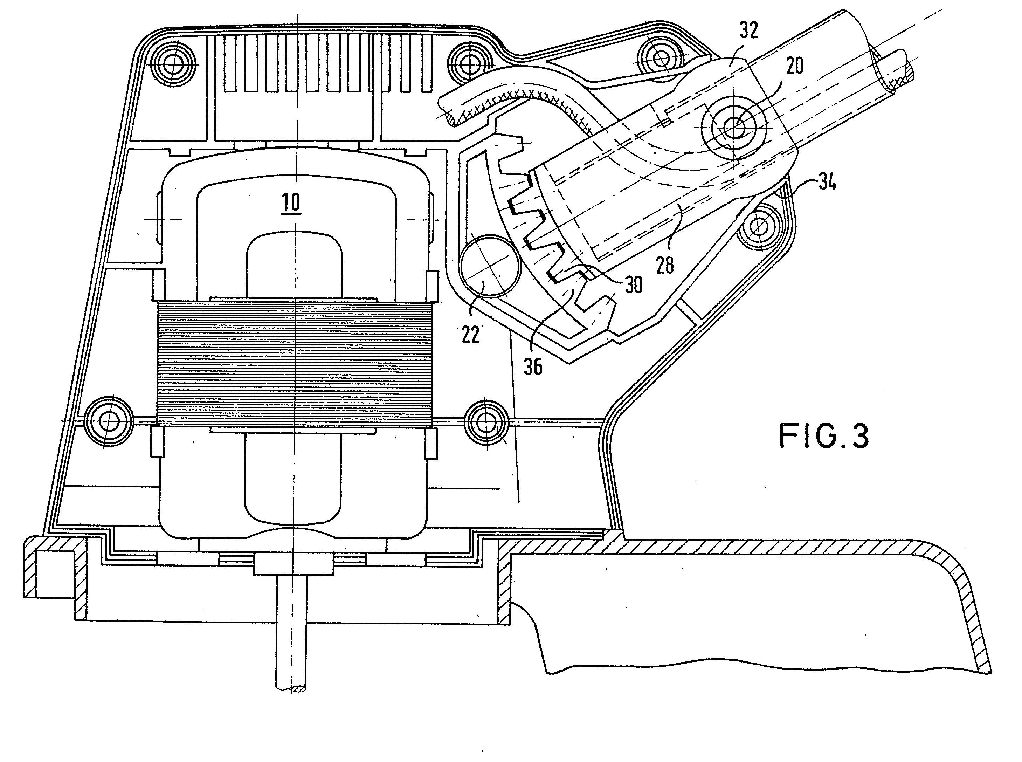

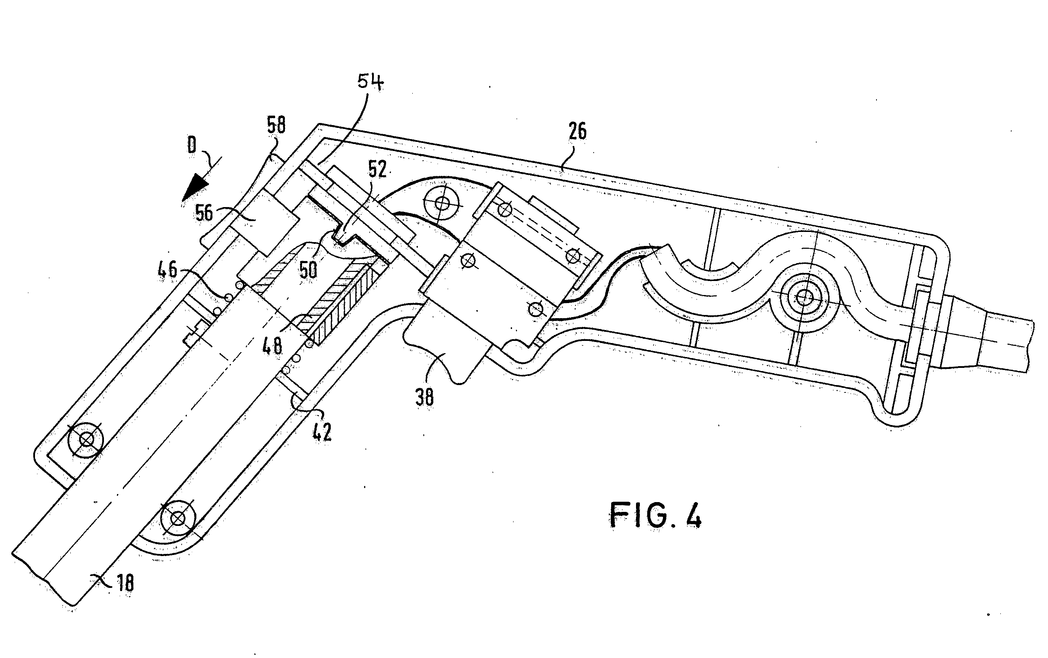

Der Fadenschneider weist ein den Elektromotor 10 umschließendes Motorgehäuse 12 auf, aus dem unten der Schneidkopf 14 vorsteht, der von der Welle des Motors angetrieben wird. Radial steht aus dem Schneidkopf 14 ein nicht dargestellter Faden vor, der den Schneidvorgang übernimmt. Zwischen Schneidkopf und Motorgehäuse befindet sich eine Schutzabdeckung 16, innerhalb derer der Faden umläuft. An dem Motorgehäuse 12 setzt ein Stiel 18 an, der gegenüber dem Motorgehäuse um eine Achse 20 (Fig. 3) kippbar ist und zwischen der in Fig. 1 ausgezogenen Stellung und der in Fig. 1 strichlierten Stellung verschwenkt werden kann. Mit dem Bezugszeichen 22 ist ein Auslöseknopf bezeichnet. Der Stiel trägt im Mittelabschnitt einen Hilfsgriff 24 in Gestalt eines Rades. Das obere Ende des Stiels 18 ist über ein in Fig. 4 dargestelltes Drehgelenk mit dem Handgriff 26 verbunden. Fig. 2 zeigt den in Fig. 1 dargestellten Fadenschneider um 180° gedreht, so daß der Faden in einer etwa vertikalen Ebene umläuft, während gemäß Fig. 1 der Faden eine horizontale Schneidebene beschreibt.

Nähere Einzelheiten des Kippgelenkes ergeben sich aus Fig. 3. Der Stiel ist um die Achse 20 im Griffgehäuse gelagert. In diesem Lageabschnitt trägt der Stiel eine Hülse 28, die am vorderen Ende mit einem Rastsegment 30 versehen ist.

Ein kugelförmiger Abschnitt 32 der Hülse 28 wird von einer Plastikkugelpfanne 34 des Griffgehäuses berührt, so daß sich ein dichter Abschluß ergibt. Dem Stielende gegenüberliegend ist im Gehäuse ein Zahnsegment 36 quer zur Stielachse verschiebbar, aber drehfest gelagert. Durch Drücken auf den auf dem Griffgehäuse vorstehenden Knopf 22 kann das Rastsegment 36 verschoben und dabei außer Eingriff mit den Rastzähnen 30 gebracht werden. Nach dieser Auskupplung kann der Stiel beliebig gekippt werden, und in der gewünschten Kippstellung kann eine Einrastung erfolgen, so daß eine formschlüssige Verbindung in der gewünschten Winkelstellung hergestellt ist. In der Praxis wird der Fadenschneider oft dazu verwendet, Gas unter Büschen, Hecken und Zäunen zu schneiden, und dabei ist der aufrecht stehende Stiel häufig im Weg. Durch die Kippbarkeit des Stiels ist eine leichtere Bedienung unter diesen Umständen möglich.

Wie aus Fig. 4 ersichtlich, weist der Handgriff 26 einen pistolenartigen Griffschalter 38 zum Einschalten des Stroms auf. Eine Zwischenwand 42 in Gestalt eines Ringes verläuft im Mittelabschnitt zwischen Stiel 18 und Gehäusewand. Diese Zwischenwand 42 ist mit dem Griffgehäuse 26 verbunden.

Auf der Oberseite stützt sich eine Druckschraubenfeder 46 ab. Diese Druckschraubenfeder 46 wirkt auf eine lose auf dem Stiel 18 gleitende Kupplungsmuffe 48, welche stirnseitig Kupplungsausschnitte 50 besitzt. Mit diesen Ausschnitten 50 wirken Kupplungsklauen 52 zusammen, die am Stielende fixiert sind. Das hintere Ende des Stiels ist über eine weitere Zwischenwand 54 drehbar im Griffgehäuse abgestützt. Eine axiale Festlegung zwischen Griffgehäuse und Stiel 18 erfolgt dadurch, daß die Zwischenwand 54 fest mit Umfangsnut des Stielendes eingreift, die auch durch zwei im Abstand zueinander aufgesetzte Scheiben gebildet sein kann. Die Kupplungsmuffe 48 ist axial verschiebbar, aber drehfest mittels eines Steges 56 in einem Schlitz des Griffgehäuses geführt und in Richtung des Pfeiles P, d. h. in Stiellängsrichtung verschiebbar. Die Verschiebung erfolgt durch einen Handhabeknopf 58, der am Steg 56 angebracht ist.

Um den Fadenschneider aus der Lage gemäß Fig. 1 (voll ausgezogen) in die Lage gemäß Fig. 2 zu überführen, d. h. um eine Rasenkante in aufrechter Stellung schneiden zu können, muß der Fadenschneider bzw. das Gehäuse des Motors um 180° gedreht werden (unter der Voraussetzung, daß der Siel unter 45° ansetzt). Zu diesem Zweck wird der Handhabeknopf 58 nach vorn geschoben und dadurch wird die Kupplungsbuchse 48 aus den Kupplungszähnen 52 ausgehoben, so daß das Gerät um 180° bis zum Anschlag gedreht werden kann. Wenn die Endstellung erreicht ist, rastet der Handhabeknopf 58 mit der Kupplungsmuffe 48 unter der Wirkung der Feder 46 wieder ein. Gemäß dem dargestellten Ausführungsbeispiel sind zwei diametral gegenüberliegende Kupplungsklauen 52 bzw. Einschnitte 50 vorgesehen, so daß eine Einrastung in zwei um jeweils 180° gegeneinander verdrehten Stellungen möglich ist. Hierdurch läßt sich ein horizontales und vertikales Schneiden einstellen. Es bleibt natürlich vorbehalten, auch mehrere Raststellungen vorzusehen, um Zwischenstellungen einstellen zu können. Während der Drehbewegung und insbesondere auch beim Schneiden in einer vertikalen Schneidebene kann das Gerät bequem über den Hilfsgriff 24 in jeder Drehstellung erfaßt werden.

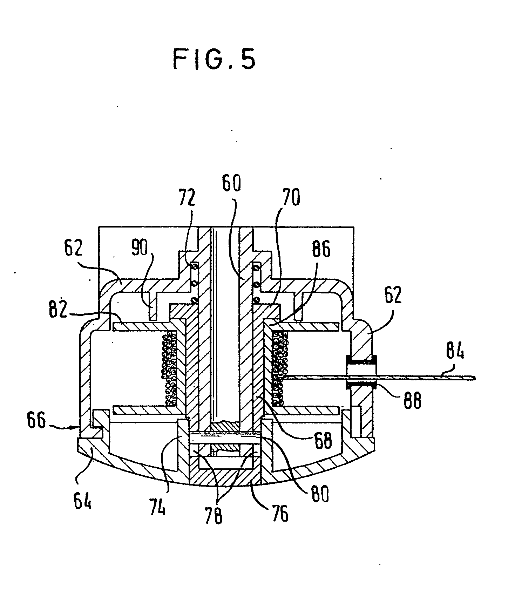

Der Schneidkopf gemäß Fig. 5 weist ein topfartiges, einstückig mit einer Nabe 60 geformtes Gehäuse 62 auf, welches durch einen Deckel 64 verschlossen ist, der mit einem Bajonettverschluß 66 lösbar mit dem Gehäuse verbunden ist. Dieser konvex geformte Deckel ist beim Schneiden dem Boden zugewandt. Auf der Nabe 60 ist axial verschiebbar eine Hülse 68 gelagert, die einen Flansch 70 aufweist, der unter der Wirkung einer Druckschraubenfeder 72 steht, die im Gehäuse 62 abgestützt ist. Der Deckel 64 weist einen die Hülse 68 führenden Ringbund 74 auf, durch den die Hülse durch den Deckel vorsteht und dort mit einem Druckknopf 76 ausgestattet ist, dessen Oberfläche mit der Oberfläche des Deckels 64 fluchtet. Die Hülse 68 weist diametral gegenüberliegend zwei achsparallele Schlitze 78 auf, in die ein durch diametrale Bohrungen der Nabe 60 geführter Stift 80 einsteht und so die Hülse 68 drehfest mit der Nabe 60 verbindet, und die axiale Verschiebung auf der Nabe begrenzt. Die Hülse 68 lagert eine Fadenspule 82, auf der ein Schneidfaden 84 aufgespult ist. Diese Spule 82 weist einen dem Kupplungsflansch 70 der Hülse 68 zugewandten Kupplungsflansch 86 auf. Durch diese Kupplungsflansche 70 und 86, die durch die Feder 72 in Kupplungseingriff gebracht werden, wird die Fadenspule 82 drehfest mit der Hülse 68 und damit drehfest gegenüber dem Schneidkopfgehäuse festgelegt. Der Schneidfaden 84 ist durch eine radiale Bohrung mit Führungsbuchse 88 nach außen geführt. Wenn der Faden abgenutzt ist, wird durch Druck auf den Knopf 76 der Kupplungseingriff der Flansche 70, 86 gelöst und der Faden 84 kann beliebig weit nach außen gezogen werden. Wenn der Fadenvorrat verbraucht ist, kann nach Abnahme des Deckels 64 die Spule von der Hülse 68 axial abgezogen werden und es kann eine neue Spule aufgesetzt werden.

Die Spule 82 wird von einem Ringflansch 90 abgestützt, wenn die Hülse zum Zwecke der Entkupplung axial eingedrückt wird. Die Kupplungsflansche können als Reibungskupplungen wirken, sie können jedoch auch mit Kupplungszähnen oder anderen formschlüssig in Eingriff gelangenden Kupplungsmitteln ausgestattet sein. Der Ringbund 74 des Deckels 64 stützt die Fadenspule in axialer Richtung ab.

**Patentansprüche**

1. Fadenschneider mit einem von einem Motor angetriebenen Schneidkopf, von dem wenigstens ein Schneidfaden radial bezüglich der Drehachse in einer vorbestimmten Schneidlänge vorsteht, mit einem Motorgehäuse, das über einen Stiel mit einem Handgriff verbunden ist, mit einem Drehgelenk, durch das die Schneidebene des Fadenschneiders von der Horizontalstellung in eine Stellung mit vertikaler Schneidebene verstellbar ist und mit einem Hilfsgriff im Mittelabschnitt des Stiels, dadurch gekennzeichnet, daß zwischen dem den Schneidkopf (14) tragenden Motorgehäuse (12) und dem Stiel (18) ein in verschiedenen Kippstellungen festlegbares Kippgelenk (20) vorgesehen ist, dessen Schwenkachse senkrecht zur Stielachse und parallel zur Schneidebene derart verläuft, daß der Stiel von der Senkrechten bis in die Horizontale gekippt werden kann und daß am Handgriff (26) ein Handhabeknopf (58) vorgesehen ist, über den das Drehgelenk so entsperrt werden kann, daß das Gerät um 180° gedreht werden kann.

2. Fadenschneider nach Anspruch 1, dadurch gekennzeichnet, daß das Kippgelenk (20) Zahnsegmente (30 bzw. 36) am Stiel bzw. am Gehäuse aufweist, und daß das gehäusefeste Zahnsegment (36) über ein Betätigungsglied (22) aushebbar ist.

3. Fadenschneider nach Anspruch 1, dadurch gekennzeichnet, daß der Hilfsgriff (24) als Radkörper ausgebildet ist.

4. Fadenschneider nach Anspruch 2, dadurch gekennzeichnet, daß das gehäusefeste Zahnsegment (36) auf einer das Stielende umgreifenden Hülse gelagert ist.

5. Fadenschneider nach Anspruch 4, dadurch gekennzeichnet, daß die Hülse (28) Kugelschalenabschnitte (32) aufweist, deren Krümmungsmittelpunkt auf der Kippachse des Kippgelenks (20) liegt, und daß diese Kugelabschnitte (32) von Kugelschalenabschnitten (34) des Gehäuses dichtend umfaßt sind.

6. Fadenschneider nach Anspruch 1, dadurch gekennzeichnet, daß eine Kupplungshülse (48) drehfest aber axial verschieblich im Handgriff (26) angeordnet ist, welche das Ende des Stiels (18) umfaßt und Kupplungsausnehmungen (50) aufweist, die mit Kupplungsklauen (52) am Stielende zusammenwirken und daß die Kupplungshülse (48) über einen Steg (56) mit dem Handhabeknopf (58) außerhalb des Handgriffs (26) verbunden ist, wobei der Steg (56) in einem Längsschlitz des Handgriffs (26) geführt ist, und daß zwischen der Kupplungshülse (48) und einer im Handgriff (26) festgelegten Ringscheibe (42) eine Druckschraubenfeder (46) den Stiel (18) umgreifend abgestützt ist, die im Sinne eines Kupplungseingriffs wirkt.

7. Fadenschneider nach Anspruch 1 mit einem Schneidkopf auf einer rotierenden Welle, der eine Fadenspule umschließt, von der quer zur Drehachse durch eine radiale Gehäuseöffnung der Schneidfaden vorsteht, der nach Lösen einer im Betrieb Schneidkopf und Spule drehfest verbindenden Kupplung zur Einstellung der Schneidlänge abziehbar ist, dadurch gekennzeichnet, daß die Fadenspule (82) drehbar auf einer Hülse (68) gelagert ist, die ihrerseits auf einer Nabe (60) des Gehäuses (62) drehfest aber axial gegen die Kraft einer Feder (72) verschiebbar ist, und einen Kupplungsflansch (70) aufweist, der mit einem Kupplungsflansch (86) der Fadenspule zusammenwirkt, und daß die Kupplung als Zahnkupplung ausgebildet ist und die Kupplungsflansche (70, 86) mit formschlüssig ineinandergreifenden Verzahnungen oder Klauen versehen sind.

8. Fadenschneider nach Anspruch 7, dadurch gekennzeichnet, daß die Hülse (68) mit einem Druckknopf (76) durch eine Öffnung eines Gehäusedeckels (64) zugänglich ist, der auf dem Schneidkopfgehäuse (62) lösbar befestigt ist und daß der Deckel (64) mittels eines Bajonettverschlusses auf dem Gehäuse (62) festgelegt ist.

9. Fadenschneider nach den Ansprüchen 7 und 8, dadurch gekennzeichnet, daß der Deckel (64) einen Ringbund (74) aufweist, der das äußere Ende der Hülse (68) führt und die Spule gegen Federkraft axial abstützt.

**Claims**

1. Filamentary cutter having a motor-driven cutting head from which at least one cutting filament of a predetermined cutting length extends radially of the axis of rotation, a motor housing which is connected with a handgrip via a shaft, a swivel joint through which the cutting plane of the filamentary cutter is adjustable from the horizontal position into a position with a vertical cutting plane, and an auxiliary grip in the middle section of the shaft, characterised in that a hinge (20), which can be fixed in various tilted positions is provided between the motor housing (12) which carries the cutting head (14) and the shaft (18), with the pivot axis of the hinge extending at right angles to the axis of the shaft and parallel to the cutting plane in such a way that the shaft can be tilted from the vertical into the horizontal, and in that a manipulating knob (58) is provided on the handgrip (26) by means of which the swivel joint can be unlocked so that the apparatus can be turned through 180°.

2. Filamentary cutter according to claim 1 and characterised in that the hinge (20) has toothed segments (30 and 36) on the shaft and on the housing respectively, and in that the toothed segment (36) fixed to the housing can be lifted out of engagement via an actuating member (22).

3. Filamentary cutter according to claim 1 and characterised in that the auxiliary grip (24) is formed as a wheel member.

4. Filamentary cutter according to claim 2 and characterised in that the toothed segment (36) fixed to the housing is mounted on a sleeve engaging around the end of the shaft.

5. Filamentary cutter according to claim 4 and characterised in that the sleeve (28) has spherical segments (32) the centre of curvature of which lies on the pivot axis of the hinge (20) and in that these spherical segments (32) are sealingly surrounded by spherical cup segments (34) of the housing.

6. Filamentary cutter according to claim 1 and characterised in that a coupling sleeve (48) is rotationally fixed but axially displaceably arranged in the handgrip (26) which surrounds the end of the shaft (18) and has coupling recesses (50) which co-operate with coupling dogs (52) on the end of the shaft, and in that the coupling sleeve (48) is connected with the manipulating knob (58) outside the handgrip (26) via a web (56), with the web (56) being guided in a longitudinal slot of the handgrip (26), and in that a compression coil spring (46), which acts in the sense of a coupling engaging device and surrounds the shaft (18), is braced between the coupling sleeve (48) and an annular disc (42) secured in the handgrip (26).

7. Filamentary cutter according to claim 1 having a cutting head on a rotary shaft, the cutting head surrounding a filament spool from which the cutting filament projects transversely to the axis of rotation through a radial aperture of the housing, with the cutting filament being extractable to adjust the cutting length on release of a coupling which in operation rotationally connects the cutting head and the coil, characterised in that the filament spool (82) is rotatably journalled on a sleeve (68) which is in turn rotationally fixed on a hub (60) of the housing (62) but is axially displaceable against the force of a spring (72) and has a coupling flange (70) which co-operates with a coupling flange (86) of the filament spool, and in that the coupling is formed as a toothed coupling and the coupling flanges (70, 86) are provided with teeth or claws which engage with one another in a form-locked manner.

8. Filamentary cutter according to claim 7 and characterised in that the sleeve (68) with a push button (76) is accessible through an aperture of a housing cover (64) which is releasably secured on the cutting head housing (62) and in that the cover (64) is fastened to the housing (62) by means of a bayonet closure.

9. Filamentary cutter according to the claims 7 and 8 und characterised in that the cover (64) has an annular collar (74) which guides the outer end of the sleeve (68) and axially supports the spool against spring force.

## Revendications

1. Coupe-bordure à fil, qui comprend: une tête de coupe entraînée par un moteur électrique et à partir de laquelle s'avance radialement vers l'extérieur, par rapport à l'axe de rotation, au moins un fil de coupe, en une longueur de coupe déterminée; un capot de moteur relié à une poignée au moyen d'un manche; une articulation à rotation au moyen de laquelle le plan de coupe du coupe-bordure peut être amené à passer de la position horizontale à une position à plan de coupe vertical; et une poignée auxiliaire située dans le segment médian du manche, caractérisé en ce qu'il est prévu, entre le capot (12) du moteur, capot qui porte la tête de coupe (14), et le manche (18), une articulation à basculement (20) verrouillable dans différentes positions de basculement et dont l'axe de rotation est orienté perpendiculairement à l'axe du manche et parallèlement au plan de coupe, de telle manière que le manche peut être basculé depuis la verticale jusqu'à l'horizontale et en ce qu'il est prévu sur poignée (26) un bouton de manoeuvre (58) à l'aide duquel l'articulation à rotation peut être déverrouillée de manière que l'outil puisse être tourné de 180°.

2. Coupe-bordure à fil suivant la revendication 1, caractérisé en ce que l'articulation à basculement (20) comprend des secteurs dentés (30 et 36) respectivement solidaires du manche et du capot, et en ce que le secteur denté (36) solidaire du capot peut être mis hors prise au moyen d'un organe de manoeuvre (22).

3. Coupe-bordure à fil suivant la revendication 1, caractérisé en ce que la poignée auxiliaire (24) est constituée par un élément en forme de roue.

4. Coupe-bordure à fil suivant la revendication 2, caractérisé en ce que le secteur denté (30) (36) solidaire du manche (capot) est monté sur un manchon entourant l'extrémité du manche.

5. Coupe-bordure à fil suivant la revendication 4, caractérisé en ce que le manchon (28) présente des segments (32) à rotule (et à cuvette) dont le centre de courbure est situé sur l'axe de basculement de l'articulation à basculement (20) et en ce que ces segments sphériques (32) sont entourés à joint étanche par des segments (à rotule et) à cuvette (34) (32) solidaires du capot.

6. Coupe-bordure à fil suivant la revendication 1, caractérisé en ce qu'un manchon d'accouplement (48) est disposé d'une manière angulairement indécalable mais à coulissement axial dans la poignée (26), manchon qui entoure l'extrémité du manche (18) et présente des entailles d'accouplement (50) qui coopèrent avec des griffes d'accouplement (52) présentes sur l'extrémité du manche; en ce que le manchon d'accouplement (48) est relié par un ergot (56) au bouton de manoeuvre (58) situé à l'extérieur de la poignée (26), l'ergot (56) étant guidé dans une fente longitudinale de la poignée (26), et en ce qu'un ressort de pression hélicoidal (46), qui entoure le manche (18) est arc-bouté entre le manchon d'accouplement (48) et un disque annulaire (42) fixé dans la poignée (26), ce ressort agissant dans le sens de l'enclenchement de l'accouplement.

7. Coupe-bordure à fil suivant la revendication 1, comprenant une tête de coupe montée sur un arbre rotatif et renfermant une bobine de fil, à partir de laquelle s'avance, transversalement à l'axe de rotation, à travers un orifice radial du capot, le fil de coupe, lequel peut être dévidé, en vue de l'ajustement de la longueur de coupe, après la mise hors prise d'un accouplement qui, en cours de fonctionnement, relie la bobine à la tête de coupe d'une manière indécalable angulairement, caractérisé en ce que la bobine de fil (82) est disposée à rotation sur une douille (68), laquelle est à son tour montée sur un moyeu (60) du carter (62) d'une manière non rotative, mais à glissement axial à l'encontre de la force d'un ressort (72) et présente une bride d'accouplement (70) qui coopère avec une bride d'accouplement (86) de la bobine de fil, et en ce que l'accouplement est du type à dentures, les brides d'accouplement (70, 86) étant pourvus de dentures ou griffes en prise géométrique entre eux.

8. Coupe-bordure à fil suivant la revendication 7, caractérisé en ce que le manchon (68) est accessible, au moyen d'un bouton poussoir (76), à travers un orifice du couvercle (64) du capot, lequel couvercle est fixé amoviblement sur le capot (62) de la tête de coupe et en ce que le couvercle (64) est assujetti par un joint à baionnette au capot (62).

9. Coupe-bordure suivant les revendications 7 et 8, caractérisé en ce que le couvercle (64) présente un collier annulaire (74) qui quide l'extrémité extérieure du manchon (68) et qui offre un appui axial à la bobine à l'encontre de la force d'un ressort.

# FIG.1

# FIG. 2

FIG.3

FIG. 4

# FIG.5